# EUROPÄISCHE PATENTSCHRIFT

(11) **EP 1 319 214 B1**
(45) Veröffentlichungstag und Bekanntmachung des Hinweises auf die Patenterteilung: **16.06.2004**
(21) Anmeldenummer: 01974012.5
(22) Anmeldetag: 05.09.2001
(51) Int. Cl.: G06K 11/06, G06K 11/08, G06K 11/16, G06F 3/033

(54) **BERÜHRUNGSSENSITIVE ANZEIGE MIT TAKTILER RÜCKKOPPLUNG**
TOUCH-SENSITIVE DISPLAY WITH TACTILE FEEDBACK
INDICATEUR SENSIBLE AU TOUCHER A RETROCOUPLAGE TACTILE

(30) Priorität: 18.09.2000 DE 10046099
(43) Veröffentlichungstag der Anmeldung: 18.06.2003
(73) Patentinhaber: SIEMENS AKTIENGESELLSCHAFT, 80333 München (DE)
(72) Erfinder: FRANZEN, Michael, 46395 Bocholt (DE)
(86) Internationale Anmeldenummer: PCT/DE2001/003402
(87) Internationale Veröffentlichungsnummer: WO 2002/027645

(56) Entgegenhaltungen:
- US-A- 5 412 189
- US-A- 5 977 867
- US-A- 6 118 435

## Beschreibung

Die Erfindung betrifft eine berührungssensitive Anzeige mit taktiler Rückkopplung.

Berührungssensitive Anzeigen "Touchscreens" kommen überwiegend in sogenannten Touchscreen-Terminals zu Einsatz, die mittels Fingerberührung des Bildschirms durch einen Benutzer bedient werden, wobei die vom PC bekannte Tastatur und Maus meist entfallen.

Eine Bestätigung, dass eine von einem Benutzer getätigten Eingaben erfolgt ist, wird im Allgemeinen durch audiovisuelle Rückkopplung erreicht, beispielsweise durch einen Piepton oder Farbwechsel des Anzeigebereichs beim Berühren der Anzeige.

Touchscreen-Terminals werden auf Messen, Präsentationen oder im Empfangsbereich eines Unternehmens zum Dialog mit Kunden aufgestellt. Ebenso finden Touchscreen-Terminals auch Anwendung auf Flughäfen, in Stadtzentren als Informations-Terminals für Touristen und in Produktionsstätten zur Erfassung und Steuerung von Produktionsabläufen.

Ein Nachteil bei den zuletzt genannten Anwendungen sind laute und unregelmäßig auftretende Umgebungsgeräusche, die an Flughäfen, Straßen bzw. Produktionsstätten gegeben, so das die Gefahr besteht, dass eine auditive Rückkopplung durch die Umgebungsgeräusche überlagert werden und vom Benutzer unbemerkt bleiben.

Eine visuelle Rückkopplung ist ebenfalls von Umgebungseinflüssen abhängig. Beispielsweise können direkte oder reflektierte Sonnenstrahlen zu Irritationen führen, so dass eine visuelle Rückkopplung nicht ihre Wirkung erzielt. Zudem kommt es auch vor, dass der Benutzer für die visuelle Rückkopplung vorgesehenen Bereiche der Anzeige durch die Hand verdeckt.

Aus der US 4,885,565 ist dazu ein berührungssensitiver Monitor bekannt, bei dem bei einer durch Berührung erfolgten Eingabe eines Benutzers eine taktile Rückkopplung ausgelöst wird, wobei dazu eine Schwingspule durch einen Mikroprozessor derart angesteuert wird, dass sie einen mechanischen Impuls auslöst, der das Gehäuse des Monitors in Schwingung versetzt, so dass zusätzlich zur audiovisuellen Rückkopplung der Benutzer auch spürt, dass seine Eingabe detektiert wurde.

Nachteilig bei dieser Lösung ist, dass egal welche Eingabe durch Berührung erfolgt ist, stets die gleiche taktile Rückkopplung erfolgt und erst durch die Verbindung mit der nach wie vor vorhandenen audiovisuellen Rückkopplung eine Differenzierung möglich ist.

Aus der US 6,118,435 ist ein weiterer berührungssensitiver Monitor bekannt, bei dem bei einer Benutzereingabe eine taktile Rückkopplung ausgelöst wird, wobei auch komplexere mechanische Impulse an den Benutzer übermittelt werden können. Neben horizontalen oder vertikalen Oszillationen werden bei einer Berührung beispielsweise auch einmalige horizontale Verschiebungen mit einem anschließenden Halten vorgeschlagen. Als weitere Möglichkeit wird ferner ein plötzliches Zurückweichen oder Hervortreten der Eingabefläche bei einer Betätigung genannt. Auch diese Technik erlaubt jedoch keine punktuell differenzierte taktile Rückkopplung sondern lediglich kollektive Anregungen der gesamten Eingabefläche.

Die der Erfindung zugrundeliegende Aufgabe ist es eine berührungsempfindliche Anzeige mit taktiler Rückkopplung anzugeben, die die Nachteile des Standes der Technik löst.

Diese Aufgabe wird durch die Merkmale des Patentanspruches 1 gelöst.

Erfindungsgemäß weist eine berührungssensitive Anzeige mit taktiler Rückkopplung eine erste mechanisch flexible Schicht, derart ausgestaltet, dass sie als Anzeige funktioniert beispielsweise eine als elektronisches Papier bekannte Folie, eine zweite Schicht aufweisend mindestens einen Rezeptor, eine dritte Schicht aufweisend mindestens einen steuerbaren Aktor, wobei die zweite Schicht derart angeordnet ist, dass der Rezeptor eine Berührung in zumindest einem Teilbereich der ersten Schicht unter Erzeugung mindestens eines ersten Signals erfasst und wobei die dritte Schicht derart angeordnet ist, dass der steuerbare Aktor die erste Schicht zumindest in dem Teilbereich punktuell mechanisch manipuliert sowie eine Steuereinrichtung, die mit der zweiten und dritten Schicht derart ausgestaltet und verbunden ist, dass in einem Ausgangszustand mindestens ein zweites Signal zur Ansteuerung des Aktors erzeugt wird, wobei auf Grundlage des ersten Signals mindestens ein geändertes zweites Signal erzeugt wird.

Die erfindungsgemäße Anzeige ermöglicht ein Erfassen einer Berührung der Anzeige durch den Rezeptor, wobei unmittelbar am Ort der Berührung ein taktiles Feedback gegeben wird, in dem beispielsweise bei einem auf der Anzeige dargestellten virtuellen Tastenblock, der durch Druck auf die entsprechende Stelle der Anzeige bedient werden kann, für jede der dargestellten Tasten des Tastenblocks durch den Aktor eine fühlbare Begrenzung und/oder eine Tastaturbeschriftung, die insbesondere auch für die Realisierung eines Terminals für Sehbehinderte bzw. Blinde hilfreich ist - realisiert wird. Beispielsweise ist es denkbar, das Tastatur und Beschriftung für Sehende dargestellt werden, während gleichzeitig durch den Aktor eine Ausgabe in Blindenschrift "Brailleschrift" unterhalb der dargestellten Taste erzeugt wird.

Durch geeignete Steuerung (Software) kann, um den Eindruck einer wirklichen Tastatur näher zu kommen, ein Nachgeben bzw. Einrasten der virtuellen Taste erzeugt werden und es ist sogar möglich, einen Schieberegler zu simulieren, in dem eine einen Regler darstellende virtuelle Taste der Berührung bzw. dem Ziehen der Taste folgt, wobei dazu evtl. die Oberfläche eines solchen Reglers insbesondere rau und griffig erzeugt wird. Durch die erfindungsgemäße Anzeige erhält der Benutzer eine intuitive Rückkopplung, die dem Benutzer eine höhere Sicherheit im Umgang mit einer berührungssensitiven Anzeige gewährt und den Einfluss störender Geräusche und Lichtegegebenheiten minimiert bzw. neutralisiert.

Als erste Schicht besonders geeignet sind Anzeigemedien, die gemäß der Technologie des "elektronischen Papiers", "mikrogekapselten elektrophoretischen Anzeige" oder "organischen Elektro-Lumineszenz" ausgestaltet sind, da diese sehr dünn und ausgestaltet als flexible Folie mechanischen Kräften, die insbesondere punktuell auf die Folienfläche wirken, wie sie der Aktor erzeugt, nachgibt. Dabei ist die Folie derart elastisch ausgestaltet, dass sie in den Ausgangszustand vor der mechanischen Krafteinwirkung zurückkehrt, sobald die Krafteinwirkung beendet ist.

Eine Ausgestaltung des Rezeptors als Lichtgitter, erlaubt das indirekte Detektieren von Berührungen, da ein solches knapp über der ersten Schicht angebrachte Lichtgitter lediglich den Ort erfasst an dem ein Benutzer beispielsweise mit dem Finger das Licht des Gitters unterbricht, um eine virtuelle Taste zu berühren. Des Weiteren hat diese Ausgestaltung den Vorteil, dass die zweite Schicht aus dem Luft gebildet wird, welches nur durch die das Lichtgitter realisierende Einrichtungen begrenzt ist, so dass der Aktor keinen zusätzlichen Widerstand zur punktuellen mechanischen Manipulation erfährt und wenig Antriebsenergie benötigt.

Die Ausgestaltung des Aktors als Matrixanordnung von elektrisch und/oder magnetisch angetriebenen Stiften erlaubt die Erzeugung einer Rauheit bzw. Griffigkeit der virtuellen Tasten und ist insbesondere für die Realisierung der Ausgabe einer Blindenschrift besonders geeignet.

Eine Matrix von senkrecht zur Anzeige gelagerten beweglichen Stiften als Rezeptor ist geeignet, um das Einrasten bzw. Nachgeben auf einen Tastendruck zu simulieren. Auch das Erfassen eines virtuellen Schiebereglers ist mit dieser Ausgestaltung einfach zu realisieren, da für die Ermittlung der Schieberichtung lediglich der Zustand benachbarter Stifte geprüft werden muss.

Stifte von Aktor-Matrix und der Rezeptor-Matrix nebeneinander abwechselnd in der gleichen Ebene (Schicht) anzuordnen spart Raum.

Noch vorteilhafter ist es die Stifte derart auszugestalten, dass sie sowohl die Aktor als auch Rezeptor-Funktion erfüllen. Dadurch lässt sich auch effektive und platzsparende Art die Begrenzung bzw. Beschriftung einer virtuellen Taste erzeugen (herausfahren der Stifte), wobei ein (hinein-)drücken der Stifte zum einen das Detektieren der Berührung ermöglicht und zum anderen das Nachgeben bzw. Einrasten. Zudem ist die durch die Ortsübereinstimmung von Rezeptor und Aktorfunktion eine präzisere Zuordnung von ermitteltem Druckpunkt und dargestellter virtueller Information möglich.

Piezoelektrische Elemente eignen sich besonders für den Antrieb bzw. das Detektieren von Berührungen da sie, beispielsweise durch Mikroprozessoren erzeugte, Spannungen (Signale) in Druck bzw. Bewegung direkt umsetzen können und umgekehrt Druck in sofort, durch Mikroprozessoren, weiterverarbeitbare Spannungen (Signale) erzeugen.

Elektromagnetische Elemente werden, ebenso wie die piezoelektrischen Elemente, für die Realisierung von Blindenschrift Terminals, Braillezeile, bekannt und daher leicht zu erwerben.

Eine Sensormatte als Rezeptor vorzusehen, hat unter anderem den Vorteil, dass die Sensormatte als Massenprodukt günstig in der Anschaffung ist.

Ist die zweite Schicht als transparente Sensormatte ausgestaltet, die zudem unmittelbar oberhalb der ersten Schicht zu liegen kommt, wird das mechanisch flexible Anzeigemedium geschützt da es nicht mehr direkt der Berührung durch einen Nutzer ausgesetzt ist. Die Lebensdauer des, sicherlich im Vergleich zur Sensormatte mit höheren (Anschaffungs-)Kosten verbundenen Anzeigemediums wird erhöht.

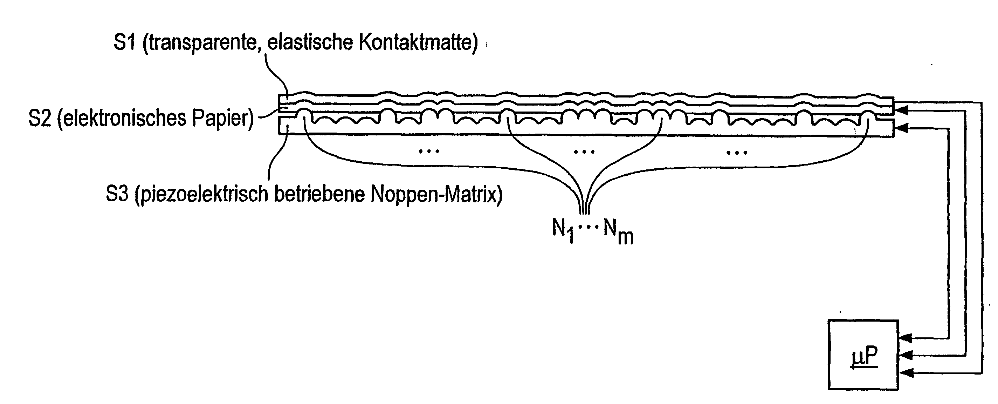

Ein Ausführungsbeispiel der Erfindung wird anhand der einzigen Figur dargestellt. Diese zeigt:
Seitenansicht des Schichtaufbaus einer berührungssensitiven Anzeige mit taktilem Feedback.

In der Figur ist eine in drei Schicht S₁, S₂ und S₃ gegliederte Anzeige in Seitenansicht dargestellt, wobei in der ersten Schicht S₁ eine transparente, flexible Sensormatte zu liegen kommt.

Diese Sensormatte ist derart ausgestaltet, dass sie Berührungen detektiert und mindestens ein erstes Signal erzeugt, das zumindest den Ort (kartesische Koordinaten) der Berührung bestimmt.

Unmittelbar oberhalb dieser ersten Schicht S₁ ist die zweite Schicht S₂ angeordnet, die durch eine flexible elastische Folie gebildet wird, welche nach der Technologie des sogenannten elektronischen Papiers ausgestaltet ist.

Unter einem elektronischem Papier wird in der Fachwelt ein eine Technologie verstanden, bei der die Vorteile von Flachbildschirmen und Druckerfarbe auf Papier vereint werden, indem kleinste Farbkapseln mit mindestens zwei Farben - etwa Schwarz und Weiß - auf einer Papierfläche je nach elektrischer Ladung an einer einzelnen Stelle mit der einen oder der anderen Seite nach oben zeigen. Für die Ansteuerung des dafür notwendigen elektrischen Feldes sind sogenannte Plastik Transistoren gedacht.

Alternative der Fachwelt bekannte Technologien sind "organische Elektro-Lumineszenz Folien" oder "mikrogekapselte elektrophoretische Anzeigen", die ebenfalls eine Ausgestaltung als flexible sehr dünne Anzeigemedien erlauben.

Für die erfindungsgemäße Anordnung ist die Anwendung dieser Technologie auf eine Folie gedacht, die mechanisch flexibel und elastisch ausgestaltet ist, so dass sie punktuell mechanisch manipuliert werden kann, um Auswuchtungen auf der Oberfläche der Folie zu erzeugen, die sich nach Beenden der mechanischen Manipulation selbständig zurückbilden.

Unterhalb der zweiten Schicht S₂ kommt die dritte Schicht S₃ zu liegen, die durch eine flächendeckende Matrix aus senkrecht zur Folienfläche beweglich gelagerten piezoelektrisch betriebenen als Nylon- oder Metallstift ausgestaltete "Noppen" N₁..Nₘ gebildet wird.

Die drei Schichten S₁, S₂ und S₃ sind dabei derart angeordnet, dass die piezoelektrisch betriebenen Noppen N₁..Nₘ die ersten beiden Schichten S₁ und S₂ punktuell mechanisch manipulieren können, so dass durch nebeneinander angeordnete Noppen N₁..Nₘ in einem Ausgangszustand Tastaturbegrenzungungen und/oder - beschriftungen eines virtuellen Tastenblock auf der Oberfläche der zweiten Schicht erzeugt und dort zu ertasten sind. Hierbei kann die Beschriftung in der Brailleschrift verfasst sein, so dass sehende Nutzer die Möglichkeit haben eine vom Anzeigenmedium dargestellte virtuelle Tastatur und ihre Funktion zu sehen, wobei sie die Tastaturbegrenzung fühlen können, und gleichzeitig sehbehinderte Nutzer die Möglichkeit haben die Tastaturfunktion durch die von den Noppen N₁..Nₘ erzeugte Brailleschrift zu ertasten.

Zumindest die zweite Schicht S₂ und die dritte Schicht S₃ sind mit einer Steuereinheit µP verbunden, die derart ausgestaltet ist, dass sie in einem Ausgangszustand, d.h. ein Zustand in dem (noch) keine Eingabe durch Berührung erfolgt ist, beispielsweise einen virtueller Tastaturblock und/oder eine virtuelle Menüleiste durch Erzeugung mindestens eines zweiten Signals, zur Ansteuerung der Noppen-Matrix N₁..Nₘ, realisiert wird. Des Weiteren ist die Steuereinheit µP derart ausgestaltet, dass sie das aufgrund einer Berührung von der Sensormatte erzeugtes erstes Signal ein mindestens ein neues zweites Signal erzeugt, wobei die Berührung in einem zulässigen Bereich, das heißt ein Bereich in dem ein virtuelles Bedienelement dargestellt ist, erfolgt sein muss.

Die Steuereinheit µP ist dazu außerdem noch mit einer die Anzeige steuernden Einheit verbunden oder bildet mit ihr eine Einheit, so dass auch Steuersignale zur Erzeugung bedienungsbedingter Veränderungen der virtuellen Bedienelemente erzeugt werden.

Als Alternative zu der Sensormatte kann in der zweiten Schicht S₂ auch ein Lichtgitter zu liegen kommen.

Lichtgitter bestehen im Allgemeinen aus zwei senkrecht zueinander angeordneten Senderleisten, die jeweils mehrere Lichtstrahlen emittieren sowie gegenüber jeder Senderleiste angeordnete Empfängerleisten, die die Lichtstrahlen detektiert. Die Lichtstrahlen der senkrecht angeordneten Senderleisten kreuzen sich dabei und erzeugen ein Lichtgitter. Bei einem Durchdringen des Lichtgitters werden auf den senkrecht zueinander angeordneten Empfängerleisten, das Ausbleiben jeweils mindestens eines Lichtstrahls detektiert, so dass sich Koordinatenpaare bilden lassen, mit denen eine genau Bestimmung des Durchdringungsortes erfolgt. Die ermittelten Koordinaten können dann als erstes Signal an die Steuereinheit µP geleitet werden.

Das Lichtgitter ist dabei derart oberhalb der ersten Schicht S₁ angeordnet, dass die durch die Noppen-Matrix N₁..N₂ punktuellen Ausbuchtungen der Anzeigenoberfläche keine Lichtstrahlen unterbrechen.

## Patentansprüche

1. Berührungssensitive Anzeige mit taktiler Rückkopplung **gekennzeichnet durch**
a) eine erste Schicht S₁ , mit einem mechanisch flexiblen Anzeigemedium,
b) eine zweite Schicht S₂ mit mindestens einem Rezeptor,
c) eine dritte Schicht S₃ mit mindestens einem steuerbaren Aktor,
d) die zweite Schicht S₂ derart angeordnet ist, dass der Rezeptor eine Berührung in zumindest einem Teilbereich der ersten Schicht S₁ unter Erzeugung mindestens eines ersten Signals erfasst,
e) die dritte Schicht S₃ derart angeordnet ist, dass der steuerbare Aktor die erste Schicht S₁ zumindest in dem Teilbereich punktuell mechanisch manipuliert,
f) eine Steuereinrichtung µP, die mit der zweiten Schicht S₂ und dritten Schicht S₃ derart ausgestaltet und verbunden ist, dass in einem Ausgangszustand mindestens ein zweites Signal zur Ansteuerung des Aktors erzeugt wird, wobei auf Grundlage des ersten Signals mindestens ein geändertes zweites Signal erzeugt wird.

2. Anzeige nach Anspruch 1, **dadurch gekennzeichnet, dass** das Anzeigemedium eine gemäß der Technologie des "elektronischen Papiers", "mikrogekapselten elektrophoretischen Anzeige" oder "organischen Elektro-Lumineszenz", ausgestaltete Folie ist.

3. Anzeige nach Anspruch 1 oder 2, **dadurch gekennzeichnet, dass** der Rezeptor als "Lichtgitter" ausgestaltet ist.

4. Anzeige nach einem der Ansprüche 1 bis 3, **dadurch gekennzeichnet, dass**
a) der Aktor eine erste Matrixanordnung beweglich gelagerter elektrisch und/oder magnetisch angetriebener Stifte N₁..Nₘ ist,
b) die Stifte N₁..Nₘ senkrecht zur Fläche der ersten Schicht S₁ bewegbar sind.

5. Anzeige nach einem der Ansprüche 2 bis 4, **dadurch gekennzeichnet, dass**
a) der Rezeptor eine zweite Matrixanordnung beweglich gelagerter Stifte N₁..Nₘ ist,
b) die Stifte N₁..Nₘ senkrecht zur Fläche der ersten Schicht S₁ bewegbar sind.

6. Anzeige nach Anspruch 5, **dadurch gekennzeichnet, dass** die zweite Schicht S₂ und dritte Schicht S₃ eine gemeinsame Schicht bilden, wobei die Stifte N₁..Nₘ der ersten Matrixanordnung und die Stifte N₁..Nₘ der zweiten Matrixanordnung nebeneinander angeordnet sind.

7. Anzeige nach Anspruch 6, **dadurch gekennzeichnet, dass** die Stifte N₁..Nₘ als Aktor und zugleich Rezeptor ausgestaltet sind.

8. Anzeige nach einem der Ansprüche 4 bis 6, **dadurch gekennzeichnet, dass** die Stifte N₁..Nₘ piezoelektrische Elemente sind.

9. Anzeige nach einem der Ansprüche 4 bis 6, **dadurch gekennzeichnet, dass** die Stifte N₁..Nₘ elektromagnetische Elemente sind.

10. Anzeige nach einem der vorhergehenden Ansprüche, **dadurch gekennzeichnet, dass** die zweite Schicht S₂ eine Sensormatte ist.

11. Anzeige nach Anspruch 10, **dadurch gekennzeichnet, dass**
a) die erste Schicht S₁ unterhalb der zweiten Schicht S₂ zu liegen kommt,
b) die zweite Schicht S₂ transparent und flexibel ist.

## Claims

1. Touch-sensitive display with tactile feedback, **characterized by**
a) a first layer S₁ with a mechanically flexible display medium,
b) a second layer S₂ with at least one receptor,
c) a third layer S₃ with at least one controllable actuator,
d) the second layer S₂ being disposed in such a way that receptor detects a contact in at least one section of the first layer S₁ and generates at least one first signal,
e) the third layer being disposed in such a way that the controllable actuator mechanically manipulates the first layer S₁ at least in some points of the section,
f) a control device µP which is designed and contacted with the second layer S₂ and the third layer S₃ in such a way that in an initial state at least one second signal for controlling the actuator is generated, whereby at least one modified second signal is generated on the basis of the first signal.

2. Display according to Claim 1, **characterized in that** the display medium is a membrane which is designed in accordance with the "electronic paper", "microencapsulated electrophoretic display" or "organic electroluminescence" technologies.

3. Display according to Claim 1 or 2, **characterized in that** the receptor is designed as a light grid.

4. Display according to one of Claims 1 to 3, **characterized in that**
a) the actuator is a first matrix arrangement of electrically and/or magnetically driven moveable pins N₁...Nₘ,
b) the pins N₁...Nₘ can move perpendicular to the surface of the first layer S₁.

5. Display according to one of Claims 2 to 4, **characterized in that**
a) the receptor is a second matrix arrangement of electrically and/or magnetically driven moveable pins N₁...Nₘ,
b) the pins N₁...Nₘ can move perpendicular to the surface of the first layer S₁.

6. Display according to Claim 5, **characterized in that** the second layer S₂ and third layer S₃ form a common layer, whereby the pins N₁...Nₘ of the first matrix arrangement and the pins N₁...Nₘ of the second matrix arrangement are located beside one another.

7. Display according to Claim 6, **characterized in that** the pins N₁...Nₘ are designed to act simultaneously as actuator and receptor.

8. Display according to one of Claims 4 to 6, **characterized in that** the pins N₁...Nₘ are piezoelectric elements.

9. Display according to one of Claims 4 to 6, **characterized in that** the pins N₁...Nₘ are electromagnetic elements.

10. Display according to one of the preceding claims, **characterized in that** the second layer S₂ is a sensor mat.

11. Display according to Claim 10, **characterized in that**
a) the first layer S₁ comes to be located beneath the second layer S₂,
b) the second layer S₂ is transparent and flexible.

## Revendications

1. Affichage sensible au contact, avec rétrocouplage tactile, **caractérisé par**
a) une première couche S₁, avec un milieu d'affichage mécanique flexible,
b) une seconde couche S₂, avec au moins un récepteur,
c) une troisième couche S₃, avec au moins un acteur pilotable,
d) la seconde couche S₂ est disposée de façon à ce que le récepteur détecte un contact dans au moins une zone partielle de la première couche S₁, en générant au moins un premier signal,
e) la troisième couche S₃ est disposée de façon à ce que l'acteur pilotable manipule la première couche S₁ de façon ponctuelle et mécanique, au moins dans la zone partielle,
f) un système de commande µP, qui est conçu et relié avec la seconde couche S₂ et la troisième couche S₃ de façon à ce que dans un état initial, au moins un second signal soit généré pour l'activation des acteurs, au moins un second signal modifié étant généré sur la base du premier signal.

2. Affichage selon la revendication 1, **caractérisé en ce que** le milieu d'affichage est une pellicule conçue selon la technologie du « papier électronique », de « l'affichage électrophorétique micro-encapsulé » ou « d'électroluminescence organique ».

3. Affichage selon l'une quelconque des revendications 1 ou 2, **caractérisé en ce que** le récepteur est conçu sous forme de « réseau optique ».

4. Affichage selon l'une quelconque des revendications 1 à 3, **caractérisé en ce que**
a) l'acteur est une première configuration d'une matrice de tiges N₁ ... Nₘ logées de façon mobile et entraînées par moyen électrique et/ou magnétique,
b) les tiges N₁ ... Nₘ sont mobiles perpendiculairement à la surface de la première couche S₁.

5. Affichage selon l'une quelconque des revendications 2 à 4, **caractérisée en ce que**
a) le récepteur est une seconde configuration en matrice de tiges mobiles N₁ ... Nₘ,
b) les tiges N₁ ... Nₘ sont mobiles perpendiculairement à la surface de la première couche S₁.

6. Affichage selon la revendication 5, **caractérisée en ce que** la seconde couche S₂ et la troisième couche S₃ forment une couche commune, les tiges N₁ ... Nₘ de la première configuration en matrice et les tiges N₁ ... Nₘ de la seconde configuration en matrice étant disposées les unes à côté des autres.

7. Affichage selon la revendication 6, **caractérisé en ce que** les tiges N₁ ... Nₘ sont conçues simultanément en tant qu'acteurs et que récepteurs.

8. Affichage selon l'une quelconque des revendications 4 à 6, **caractérisé en ce que** les tiges N₁ ... Nₘ sont des élément piézoélectriques.

9. Affichage selon l'une quelconque des revendications 4 à 6, **caractérisé en ce que** les tiges N₁ ... Nₘ sont des éléments électromagnétiques.

10. Affichage selon l'une quelconque des revendications précédentes, **caractérisée en ce que** la seconde couche S₂ est une natte de capteurs.

11. Affichage selon la revendication 10, **caractérisé en ce que**
a) la première couche S₁ est située sous la seconde couche S₂,
b) la seconde couche S₂ est transparente et flexible.
